(19) Europäisches Patentamt / European Patent Office / Office européen des brevets

(11) **EP 4 462 891 A1**

(12) **EUROPEAN PATENT APPLICATION**
published in accordance with Art. 153(4) EPC

(43) Date of publication:
**13.11.2024  Bulletin 2024/46**

(21) Application number: **23759011.2**

(22) Date of filing: **07.02.2023**

(51) International Patent Classification (IPC):
**H04W 52/36** (2009.01)

(52) Cooperative Patent Classification (CPC):
**H04W 52/14; H04W 52/36**

(86) International application number:
**PCT/CN2023/074844**

(87) International publication number:
**WO 2023/160386 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.02.2022  CN 202210173492**

(71) Applicant: **Huawei Technologies Co., Ltd.
Shenzhen, Guangdong 518129 (CN)**

(72) Inventors:
• HU, Dan
  Shenzhen, Guangdong 518129 (CN)
• ZHANG, Xu
  Shenzhen, Guangdong 518129 (CN)

(74) Representative: **Pfenning, Meinig & Partner mbB
Patent- und Rechtsanwälte
Theresienhöhe 11a
80339 München (DE)**

(54) **POWER HEADROOM TRANSMISSION METHOD, APPARATUS AND SYSTEM**

(57)  This application provides a power headroom transmission method, an apparatus, and a system, and relates to the field of wireless communication technologies, to report a power headroom during radio frequency chain switching. In the method, when the radio frequency chain switching occurs, a terminal device may determine the power headroom based on at least one of a first power class and a second power class, and report the power headroom. In this way, a maximum transmit power used for the power headroom sent by the terminal device can be aligned with that of a network device. In this way, the network device may also perform uplink power control on the terminal device based on the power headroom sent by the terminal device, so that uplink power domain resource utilization can be improved.

FIG. 2

**Description**

**CROSS-REFERENCE TO RELATED APPLICATIONS**

This application claims priority to Chinese Patent Application No. 202210173492.9, filed with the China National Intellectual Property Administration on February 24, 2022 and entitled "POWER HEADROOM TRANSMISSION METHOD, APPARATUS, AND SYSTEM", which is incorporated herein by reference in its entirety.

**TECHNICAL FIELD**

This application relates to the field of wireless communication technologies, and in particular, to a power headroom transmission method, an apparatus, and a system.

**BACKGROUND**

A power headroom indicates a power that remains after a terminal device completes a current transmission. If the power headroom is a positive value, during a next time of scheduling, a base station may schedule more resource blocks for the terminal device. If the power headroom is a negative value, the terminal device reports that a transmit power scheduled by the terminal device already exceeds an allowed maximum transmit power. The maximum transmit power of the terminal device is affected by a maximum terminal power of the terminal device. In other words, when the maximum terminal power of the terminal device changes, the maximum transmit power also changes.

Currently, in a new radio access technology (new radio access technology, NR), it is proposed that the terminal can support radio frequency chain switching on a plurality of carriers. In addition, different quantities of radio frequency chains may be configured on different carriers. The different quantities of radio frequency chains correspond to different power classes. Therefore, maximum terminal powers are also different. Different maximum terminal powers affect calculation of the power headroom. When the radio frequency chain switching of the terminal device occurs, how to report the power headroom becomes an urgent problem to be resolved.

**SUMMARY**

This application provides a power headroom transmission method, an apparatus, and a system, to implement accurate power headroom reporting performed by a terminal device during radio frequency chain switching.

According to a first aspect, a power headroom transmission method is provided. The method may be performed by a terminal device or a chip with a similar function of the terminal device. In the method, the terminal device receives first indication information, where the first indication information indicates radio frequency chain switching. The terminal device sends a first uplink transmission, where the first uplink transmission includes information about a power headroom. The power headroom is determined based on at least one of a first power class and a second power class. The first power class corresponds to an uplink transmission after the radio frequency chain switching. The second power class corresponds to an uplink transmission before the radio frequency chain switching. The first uplink transmission is the uplink transmission after the radio frequency chain switching.

According to the foregoing solution, when the radio frequency chain switching occurs, the terminal device may determine the power headroom based on the at least one of the first power class and the second power class, and report the power headroom. In this way, a maximum transmit power used for the power headroom sent by the terminal device can be aligned with that of a network device. In this way, the network device may also perform uplink power control on the terminal device based on the power headroom sent by the terminal device, so that uplink power domain resource utilization can be improved.

In an example, the first indication information may indicate carrier switching. Alternatively, the first indication information may indicate that a quantity of to-be-switched radio frequency chains changes. In another example, the first indication information may indicate a specific carrier or a specific radio frequency chain to which the terminal device is to switch.

In a possible case, the first power class corresponds to the first uplink transmission. In another possible case, the second power class corresponds to a second uplink transmission. Optionally, the second uplink transmission is an uplink transmission before the first indication information is received. For example, the second uplink transmission may be a last uplink transmission before the first indication information is received.

In a possible implementation, the first power class is a power class corresponding to a quantity of radio frequency chains after the radio frequency chain switching, and the second power class is a power class corresponding to a quantity of radio frequency chains before the radio frequency chain switching.

According to the foregoing solution, when the radio frequency chain switching occurs, the terminal device may determine the power headroom based on at least one of the power class corresponding to the quantity of radio frequency chains after the radio frequency chain switching and the power class corresponding to the quantity of radio frequency chains before the radio frequency chain switching, and report the power headroom.

In an example, the first power class is a power class corresponding to a quantity of radio frequency chains after carrier switching, and the second power class is a power class corresponding to a quantity of radio frequency chains before the carrier switching. In another example, the first power class is a corresponding power class after a change of the quantity of radio frequency chains, and the second power class is a corresponding power class before the change of the quantity of radio frequency chains.

In a possible implementation, the power headroom includes a first power headroom and a second power headroom. The first power headroom is a power headroom determined based on the first power class, and the second power headroom is a power headroom determined based on the second power class.

According to the foregoing solution, when the radio frequency chain switching occurs, the terminal device may determine the power headroom based on the first power class and the second power class, and report the power headroom. In this way, a maximum transmit power used for the power headroom sent by the terminal device can be aligned with that of a network device.

In a possible implementation, the power headroom includes a first power headroom and does not include a second power headroom. The first power headroom is a power headroom determined based on the first power class, and the second power headroom is a power headroom determined based on the second power class.

According to the foregoing solution, when the radio frequency chain switching occurs, the terminal device may determine the power headroom based on the first power class, and report the power headroom. In this way, a maximum transmit power used for the power headroom sent by the terminal device can be aligned with that of a network device.

In a possible implementation, the power headroom includes a second power headroom and does not include a first power headroom. The first power headroom is a power headroom determined based on the first power class, and the second power headroom is a power headroom determined based on the second power class.

According to the foregoing solution, when the radio frequency chain switching occurs, the terminal device may determine the power headroom based on the second power class, and report the power headroom. In this way, a maximum transmit power used for the power headroom sent by the terminal device can be aligned with that of a network device.

In a possible implementation, the first power headroom may be determined based on a first maximum transmit power determined based on the first power class. The second power headroom may be determined based on a second maximum transmit power determined based on the second power class.

In a possible implementation, the first indication information may be downlink control information (downlink control information, DCI) or information included in a media access control (media access control, MAC) control element (control element, CE). According to the foregoing solution, the first indication information may be transmitted in a plurality of manners, so that an implementation of the first indication information is flexible.

In a possible implementation, the terminal device may further receive first radio resource control (radio resource control, RRC) signaling, where the first RRC signaling includes information indicating a mechanism 1 or a mechanism 2. The mechanism 1 is to determine the power headroom based on the first power class and the second power class, and the mechanism 2 is to determine the power headroom based on the first power class.

In another possible implementation, the first RRC signaling includes information indicating a mechanism 1, a mechanism 2, or a mechanism 3. The mechanism 1 is to determine the power headroom based on the first power class and the second power class, the mechanism 2 is to determine the power headroom based on the first power class, and the mechanism 3 is to determine the power headroom based on the second power class.

According to the foregoing solution, the terminal device may determine, based on an indication of a network device, whether to determine the power headroom based on the first power class and the second power class, or determine the power headroom based on the first power class, and report the power headroom. In this way, the power headroom reported by the terminal device is expected by the network device. Therefore, the network device may also perform uplink transmission power control based on the power headroom.

In a possible implementation, the terminal device may further receive second RRC signaling, where the second RRC signaling is used to configure the DCI or the MAC CE to include indication information indicating the radio frequency chain switching. According to the foregoing solution, whether the terminal device can dynamically perform radio frequency chain switching may be determined based on RRC signaling sent by a network device.

In a possible implementation, the terminal device may further send capability information, where the capability information indicates that the terminal device supports the DCI or the MAC CE in including indication information indicating the radio frequency chain switching. According to the foregoing solution, the terminal device may send, to a network device, capability information indicating whether dynamic radio frequency chain switching is supported. In this way, the network device may indicate, based on the capability information of the terminal device, whether the terminal device can perform dynamic radio frequency chain switching.

According to a second aspect, a power headroom transmission method is provided. The method may be performed by a network device or a chip with a similar function of the network device. In the method, the network device sends first indication information, where the first indication information indicates radio frequency chain switching. The network device receives a first uplink transmission, where the first uplink transmission includes information about a power headroom. The power headroom is determined based on at least one of a first power class and a second power class. The first power class corresponds to an uplink transmission after the radio frequency chain switching. The second power class corresponds to an uplink transmission before the radio frequency chain switching. The first uplink transmission is the uplink transmission after the radio frequency chain switching.

In an example, the first indication information indicates carrier switching. Alternatively, the first indication information indicates that a quantity of radio frequency chains changes. In another example, the first indication information indicates a carrier or a radio frequency chain.

In a possible case, the first power class corresponds to the first uplink transmission. In another possible case, the second power class corresponds to a second uplink transmission. Optionally, the second uplink transmission is an uplink transmission before the first indication information is received. For example, the second uplink transmission may be a last uplink transmission before the first indication information is received.

In a possible implementation, the first power class is a power class corresponding to a quantity of radio frequency chains after the radio frequency chain switching, and the second power class is a power class corresponding to a quantity of radio frequency chains before the radio frequency chain switching.

In an example, the first power class is a power class corresponding to a quantity of radio frequency chains after carrier switching, and the second power class is a power class corresponding to a quantity of radio frequency chains before the carrier switching. In another example, the first power class is a corresponding power class after a change of the quantity of radio frequency chains, and the second power class is a corresponding power class before the change of the quantity of radio frequency chains.

In a possible implementation, the power headroom includes a first power headroom and a second power headroom. The first power headroom is a power headroom determined based on the first power class, and the second power headroom is a power headroom determined based on the second power class. In a possible implementation, the power headroom includes a first power headroom and does not include a second power headroom. The first power headroom is a power headroom determined based on the first power class, and the second power headroom is a power headroom determined based on the second power class.

In a possible implementation, the power headroom includes a second power headroom and does not include a first power headroom. The first power headroom is a power headroom determined based on the first power class, and the second power headroom is a power headroom determined based on the second power class.

In a possible implementation, the first power headroom is determined based on a first maximum transmit power determined based on the first power class. The second power headroom is determined based on a second maximum transmit power determined based on the second power class.

In a possible implementation, the first indication information may be DCI or information included in a MAC CE.

In a possible implementation, the network device sends first RRC signaling, where the first RRC signaling includes information indicating a mechanism 1 or a mechanism 2. The mechanism 1 is to determine the power headroom based on the first power class and the second power class, and the mechanism 2 is to determine the power headroom based on the first power class.

In a possible implementation, the first RRC signaling may further include information indicating a mechanism 1, a mechanism 2, or a mechanism 3. The mechanism 1 is to determine the power headroom based on the first power class and the second power class, the mechanism 2 is to determine the power headroom based on the first power class, and the mechanism 3 is to determine the power headroom based on the second power class.

In a possible implementation, the network device sends second RRC signaling, where the second RRC signaling is used to configure the DCI or the MAC CE to include indication information indicating the radio frequency chain switching.

In a possible implementation, the network device receives capability information, where the capability information indicates that a terminal device supports the DCI or the MAC CE in including indication information indicating the radio frequency chain switching.

According to a third aspect, an embodiment of this application provides a communication apparatus. The apparatus may be a terminal device, or may be a chip used in the terminal device. The apparatus has a function of implementing any implementation of the first aspect. The function may be implemented by hardware, or may be implemented by hardware executing corresponding software. The hardware or the software includes one or more modules or units corresponding to the foregoing functions.

According to a fourth aspect, an embodiment of this application provides a communication apparatus. The apparatus may be a network device, or may be a chip or a module used in the network device. The apparatus has a function of implementing any implementation of the second aspect. The function may be implemented by hardware, or may be implemented by hardware executing corresponding software. The hardware or the software includes one or more modules or units corresponding to the foregoing functions.

According to a fifth aspect, an embodiment of this application provides a communication apparatus, including a processor and a memory. The memory is configured to store computer instructions. When the apparatus runs, the processor executes the computer instructions stored in the memory, to enable the apparatus to perform any implementation of the first aspect and the second aspect.

According to a sixth aspect, an embodiment of this application provides a communication apparatus, including a unit or means (means) configured to perform steps of any implementation of the first aspect and the second aspect.

According to a seventh aspect, an embodiment of this application provides a communication apparatus, including a processor and an interface circuit. The processor is configured to: communicate with another apparatus through the interface circuit, and perform any implementation of the first aspect and the second aspect. There are one or more processors.

According to an eighth aspect, an embodiment of this application provides a communication apparatus, including a processor coupled to a memory. The processor is configured to invoke a program stored in the memory, to perform any implementation of the first aspect and the second aspect. The memory may be located inside or outside the apparatus. In addition, there may be one or more processors.

According to a ninth aspect, an embodiment of this application further provides a computer-readable storage medium. The computer-readable storage medium stores instructions, and when the instructions are run on a communication apparatus, any implementation of the first aspect and the second aspect is performed.

According to a tenth aspect, an embodiment of this application further provides a computer program product. The computer program product includes a computer program or instructions. When the computer program or the instructions are run by a communication apparatus, any implementation of the first aspect and the second aspect is performed.

According to an eleventh aspect, an embodiment of this application further provides a chip system, including a processor, configured to perform any implementation of the first aspect and the second aspect.

According to a twelfth aspect, an embodiment of this application further provides a communication system, including a terminal device configured to perform any implementation of the first aspect, and a network device configured to perform any implementation of the second aspect.

In addition, for beneficial effects of the second aspect to the twelfth aspect, refer to beneficial effects of the method shown in the first aspect.

## BRIEF DESCRIPTION OF DRAWINGS

FIG. 1 is a diagram of a communication system according to an embodiment of this application;
FIG. 2 is an example flowchart of a power headroom transmission method according to an embodiment of this application;
FIG. 3 is a scenario diagram of a power headroom transmission method according to an embodiment of this application;
FIG. 4 is an example flowchart of a power headroom transmission method according to an embodiment of this application;
FIG. 5 is a scenario diagram of a power headroom transmission method according to an embodiment of this application;
FIG. 6 is a diagram of a communication apparatus according to an embodiment of this application; and
FIG. 7 is a diagram of a communication apparatus according to an embodiment of this application.

## DESCRIPTION OF EMBODIMENTS

The following explains and describes technical terms in embodiments of this application.

1. A power headroom is a power that remains after a terminal device completes a current transmission. A network device may configure a maximum transmit power for the terminal device. In this case, the power headroom may be understood as a remaining power obtained by subtracting a transmit power of the current transmission from the maximum transmit power. For example, if a transmit power used by the terminal device a physical uplink control channel (physical uplink shared channel, PUSCH) is P1, and the maximum transmit power configured by the network device for the terminal device is P0, the power headroom may be understood as P0-P1.

2. The maximum transmit power is an upper limit of a transmit power that can be used by the terminal device to transmit one piece of information. For example, the maximum transmit power may be a maximum transmit power configured, on a sending occasion i, for a physical uplink shared link (physical uplink shared channel, PUSCH) on a carrier f of a serving cell c. The maximum transmit power is related to factors such as a sending capability of the UE and a frequency band on which the PUSCH is located.

3. A transmit channel (transmitter, TX) is a physical concept, and may also be referred to as a radio frequency (radio frequency, RF) transmit channel. In this application, the transmit channel is referred to as a radio frequency chain for short. In this application, the transmit channel may operate in, but not limited to, the following manner: The transmit channel may receive a baseband signal from a baseband chip, perform radio frequency processing (such as up-conversion, amplification, and filtering) on the baseband signal to obtain a radio frequency signal, and finally radiate the radio frequency signal to space through an antenna. Specifically, the transmit channel may include electronic components such as an antenna switch, an antenna tuner, a low noise amplifier (low noise amplifier, LNA), a power amplifier (power amplifier, PA), a mixer (mixer), a local oscillator (local oscillator, LO), and a filter (filter). These electronic components may be integrated into one or more chips according to a requirement. The antenna may also be sometimes considered as a part of the transmit channel. Optionally, the radio frequency chain in this application may be replaced with the Tx, the antenna, a radio frequency, the transmit channel, a sending port, a receive channel, or any combination thereof.

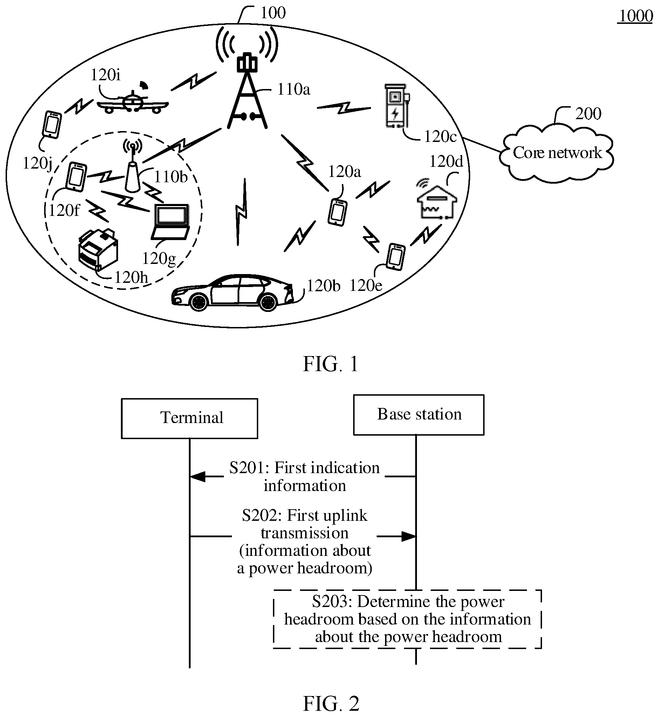

FIG. 1 is a diagram of an architecture of a communication system 1000 to which an embodiment of this application is applicable. As shown in FIG. 1, the communication system includes a radio access network 100 and a core network 200. The radio access network 100 may include at least one network device (for example, 110a and/or 110b in FIG. 1), and may further include at least one terminal apparatus (for example, at least one of 120a to 120j in FIG. 1). The terminal apparatus is connected to an access network device in a wireless manner, and the access network device is connected to the core network in a wireless or wired manner. The terminal apparatuses may be connected to each other in a wired or wireless manner, and the network devices may be connected to each other in a wired or wireless manner. FIG. 1 is merely an example diagram. The communication system may further include another network device, for example, may further include a wireless relay device and a wireless backhaul device, which are not shown in FIG. 1.

The network device is a network-side device with a wireless transceiver function. The network device may be an apparatus that is in the radio access network (radio access network, RAN) and that provides a wireless communication function for the terminal device, and is referred to as a RAN device. For example, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a media access control (media access control, MAC) layer of the base station, and may further complete some or all of functions of a physical layer. For specific descriptions of the foregoing protocol layers, refer to technical specifications related to the 3rd generation partnership project (3rd generation partnership project, 3GPP). The network device may be a macro base station (for example, 110a in FIG. 1), may be a micro base station or an indoor base station (for example, 110b in FIG. 1), or may be a relay node or a donor node. A specific technology and a specific device form that are used by the network device are not limited in embodiments of this application. For ease of description, the following provides descriptions by using an example in which the base station serves as the network device.

The terminal device is customer premise equipment with a wireless transceiver function. The terminal device may also be referred to as user equipment (user equipment, UE), a mobile station, a mobile terminal, or the like. The terminal apparatus may be widely used in various scenarios such as device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, smart office, a smart wearable device, smart transportation, and a smart city. The terminal apparatus may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific apparatus form that are used by the terminal apparatus are not limited in embodiments of this application. In embodiments of this application, an example in which the terminal is the terminal device is used for description.

The base station and the terminal may be fixed or movable. The base station and the terminal may be deployed on land, including an indoor or outdoor scenario, and a handheld or vehicle-mounted scenario; or may be deployed on water; or may be deployed on an airplane, a balloon, or an artificial satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For the terminal 120j that accesses the radio access network 100 through 120i, the terminal 120i is a base station. For the base station 110a, 120i is a terminal. In other words, communication between 110a and 120i is performed based on a radio air interface protocol. Certainly, communication between 110a and 120i may also be performed based on an interface protocol between base stations. In this case, for 110a, 120i is also a base station. Therefore, both the base station and the terminal may be collectively referred to as communication apparatuses, 110a and 110b in FIG. 1 may each be referred to as a communication apparatus having a function of the base station, and 120a to 120j in FIG. 1 may each be referred to as a communication apparatus having a function of the terminal.

Communication between the base station and the terminal, between the base stations, or between the terminals may be performed over a licensed spectrum, or may be performed over an unlicensed spectrum, or may be performed over both the licensed spectrum and the unlicensed spectrum. Communication may be performed over a spectrum below 6 gigahertz (gigahertz, GHz), or may be performed over a spectrum above 6 GHz, or may be performed over both the spectrum below 6 GHz and the spectrum above 6 GHz. A spectrum resource used for wireless communication is not limited in embodiments of this application.

In embodiments of this application, the function of the base station may alternatively be performed by a module (for example, a chip) in the base station, or may be performed by a control subsystem including the function of the base station. The control subsystem including the function of the base station herein may be a control center in the foregoing application scenarios such as the smart grid, the industrial control, the smart transportation, and the smart city. The function of the terminal may alternatively be performed by a module (for example, a chip or a modem) in the terminal, or may be performed by an apparatus including the function of the terminal.

Currently, when a terminal meets a power headroom report (power headroom report, PHR) triggering condition, the terminal may send a power headroom to a base station. If the power headroom is a positive value, during a next time of scheduling, the base station may schedule more resource blocks for the terminal device. If the power headroom is a negative value, the terminal reports that a transmit power scheduled by the terminal already exceeds an allowed maximum transmit power. A network device may adjust an uplink transmit power of the terminal based on a PHR. The following uses an example of a PHR mechanism of performing, by the terminal, a PUSCH for description.

If the terminal calculates a first-type PHR based on an actually transmitted PUSCH, the PHR may be determined by using the following formula (1):

$$
PH_{type1,b,f,c}(i,j,q_d,l) = P_{CMAX,f,c}(i) - \{P_{O,PUSCH,b,f,c}(j) + 10\log_{10}\left(2^{\mu} \cdot M_{RB,b,f,c}^{PUSCH}(i)\right) +
$$

$$
\alpha_{b,f,c}(j) \cdot PL_{b,f,c}(q_d) + \Delta_{TF,b,f,c}(i) + f_{b,f,c}(i,l)[dB]
$$

Formula (1)

$P_{O,PUSCH,b,f,c}(j)$ and $\alpha_{b,f,c}(j)$ may be collectively referred to as target power values, and $j \in \{0, 1, ..., J-1\}$. When the base station configures a plurality of parameter sets indicating values of $P_O$ and $\alpha$, the terminal determines, based on a current transmission mode such as initial access transmission, downlink control information (downlink control information, DCI)-based data scheduling transmission or RRC-based data scheduling transmission, and a value indicated by a (sounding reference signal indication, SRI) field, a number of a parameter set used in a current PUSCH transmission, to determine the values of $P_O$ and $\alpha$. Each parameter set includes an identifier (identifier, ID) of the set, and the values of $P_O$ and $\alpha$. $M_{RB,b,f,c}^{PUSCH}(i)$ is a quantity of resource blocks (resource blocks, RBs) occupied, on a sending occasion, by a PUSCH on an uplink activated BWP b of a carrier f of a serving cell c.

$\mu$ is a value corresponding to a subcarrier spacing (subcarrier size, SCS) configuration.

$PL_{b,f,c}(q_d)$ is an estimated downlink path loss value obtained by the terminal through calculation based on a reference signal index value $(q_d)$, and is used as a path loss compensation value of uplink power control.

$\Delta_{TF,b,f,c}(i)$ is determined based on factors such as locations and a quantity of occupied physical resources, and a type of information carried on the PUSCH, for example, an uplink shared channel (uplink shared channel, UL-SCH) or channel state information (channel state information, CSI).

$f_{b,f,c}(i,l)$ is a PUSCH power control adjustment state of the PUSCH on the BWP b of the carrier f of the serving cell c on a sending occasion i. The information is indicated by the base station by using DCI, so that the base station can adjust a PUSCH transmit power in real time based on a current transmission channel state and a scheduling state.

$P_{CMAX,f,c}(i)$ is a maximum transmit power configured, on the sending occasion i, for the PUSCH on the carrier f of the serving cell c, that is, the maximum transmit power mentioned in the technical terms in embodiments of this application. A value of $P_{CMAX,f,c}(i)$ satisfies the following formula (2):

$$P_{CMAX,L,f,c} \leq P_{CMAX,f,c} \leq P_{CMAX,H,f,c} \qquad \text{Formula (2)}$$

A value of $P_{CMAX,L,f,c}$ satisfies the following formula (3):

$$P_{CMAX,L,f,c} = MIN\{P_{EMAX,c} - \Delta T_{C,c}, (P_{PowerClass} - \Delta P_{PowerClass}) -$$

$$MAX(MAX(MPR_c + \Delta MPR_c, A - MPR_c) + \Delta T_{IB,c} + \Delta T_{C,c} + \Delta T_{RxSRS}, P - MPR_c)\}$$

$$\text{Formula (3)}$$

A value of $P_{CMAX,H,f,c}$ satisfies the following formula (4):

$$P_{CMAX,H,f,c} = MIN\{P_{EMAX,c}, P_{PowerClass} - \Delta P_{PowerClass}\} \qquad \text{Formula (4)}$$

In the foregoing formula (3), $\Delta T_{IB,c}$ indicates an additional tolerance of the serving cell c, and $\Delta T_{C,c}$ is a predefined value. In the formula (3), $MPR_c$ indicates an MPR, and $A-MPR_c$ indicates an additional maximum output power back-off.
Whether to use $\Delta T_{RxSRS}$ is related to an SRS port configuration and an antenna configuration. $P - MPR_c$ indicates a maximum output power back-off set to ensure regulation compliance.
In the foregoing formula (3) and formula (4), $P_{EMAX,c}$ is a value configured for an information element p-MAX or additionalPmax in an information element NR-NS-PmaxList. $P_{PowerClass}$ is a maximum terminal power defined for the terminal in different power classes. For a terminal with a power class 2 enabled, $\Delta P_{PowerClass}$=3 dB. For a terminal with a power class 3 enabled, $\Delta P_{PowerClass}$=6 dB.
It can be learned that values of $P_{PowerClass}$ in different power classes are different, and therefore values of $P_{CMAX,L,f,c}$ in different power classes are also different. As a result, power headrooms determined based on different power classes are different.
In NR, a new uplink transmission mode is proposed. If the terminal supports two carriers, the terminal may perform switching on the two carriers, to improve radio frequency chain utilization. It is assumed that the terminal has two radio frequency chains. If the terminal supports switching between the two carriers, radio frequency chains supported on different carriers may be shown in Table 1. In a related technology, a communication behavior of the terminal on the two carriers is defined by using Table 1. A carrier 1 and a carrier 2 respectively represent the two carriers, and Tx represents a radio frequency chain. A case 1 in Table 1 indicates that the terminal has one radio frequency chain on the carrier 1, and has one radio frequency chain on the carrier 2. A case 2 in Table 1 indicates that the terminal has no radio frequency chain on the carrier 1, and has two radio frequency chains on the carrier 2. It can be learned that the terminal supports a maximum of one radio frequency chain on the carrier 1, and supports a maximum of two radio frequency chains on the carrier 2. The terminal may perform switching between the two cases, in other words, may switch one radio frequency chain between the two carriers, and the switching between the two cases requires switching time. The switching time may be referred to as an uplink switching gap (uplink switching gap). Within the uplink switching gap, the terminal does not expect to perform communication on either of the two carriers.

**Table 1: Example of carrier switching**

| | Quantities of radio frequency chains on carriers (number of Tx chains in WID): the carrier 1+the carrier 2 (the carrier 1+the carrier 2) |
|---|---|
| Case 1 (case 1) | 1Tx+1Tx |
| Case 2 (case 2) | 0Tx+2Tx |

In a related technology, enhancements are made based on the radio frequency chain shown in Table 1. One enhancement is an enhancement on a quantity of Txs. A total quantity of Txs does not change, but a maximum quantity of Txs on the carrier 1 changes from 1 to 2. Refer to Table 3. It can be learned that a case, namely, a case 3, is added based on Table 1.

**Table 2: Example of carrier switching**

| | Quantities of radio frequency chains on carriers (number of Tx chains in WID): the carrier 1+the carrier 2 (the carrier 1+the carrier 2) |
|---|---|
| Case 1 (case 1) | 1Tx+1Tx |
| Case 2 (case 2) | 0Tx+2Tx |
| Case 3 (case 3) | 2Tx+0Tx |

Each radio frequency chain includes one power amplifier (power amplifier, PA). It may be understood as that a carrier on which two radio frequency chains are located has a higher transmit power than a carrier on which one radio frequency chain is located. The transmit power is about 3 decibels (dB) higher.

It can be learned from Table 1 and Table 2 that switching between the carriers of the terminal causes a change of the radio frequency chain, and the change of the radio frequency chain causes a change of the power class of the terminal. Therefore, the change of the radio frequency chain finally causes a change of the power headroom.

Currently, a time difference exists between triggering time of the PHR and actual reporting time of the PHR. The terminal can send the PHR on a corresponding PUSCH only when the PHR triggering condition is met. Therefore, if the terminal performs carrier switching in this period, a value of $P_{CMAX,f,c}$ used in the PHR reported by the terminal may not be aligned with a value of $P_{CMAX,f,c}$ based on which the base station receives the PHR. As a result, the power headroom reported by the terminal may have an error. For example, a difference between the power headroom and a power headroom required by the base station is large. Consequently, the power headroom reported by the terminal may not be used by the base station to perform uplink power control on the terminal.

In view of this, an embodiment of this application provides a power headroom transmission method, to enable, when a terminal performs carrier switching, the terminal to determine a power headroom, and send information about the power headroom to a base station, so that the base station performs power control on the terminal. FIG. 2 is an example flowchart of a power headroom transmission method according to an embodiment of this application. The method may include the following operations.

S201: A base station sends first indication information.

Correspondingly, a terminal receives the first indication information. For example, the base station sends the first indication information to the terminal, and the terminal receives the first indication information from the base station.

In S201, the first indication information may indicate radio frequency chain switching. Optionally, the first indication information may indicate carrier switching, for example, switching from the carrier 1 to the carrier 2 shown in Table 1. Optionally, the first indication information may indicate case switching, for example, switching from the case 1 to the case 2 shown in Table 1. Alternatively, the first indication information may indicate a change of a quantity of radio frequency chains. For example, the first indication information may indicate that a quantity of radio frequency chains of the terminal on the carrier 1 shown in Table 1 changes. For example, the first indication information may indicate that the quantity of radio frequency chains of the terminal on the carrier 1 changes from 1 to 2, in other words, indicate switching from one radio frequency chain to two radio frequency chains.

It should be noted that the first indication information may alternatively indicate a radio frequency chain or a carrier. For example, the first indication information may indicate the carrier 1, and the terminal may determine, based on the first indication information, whether carrier switching needs to be performed. For example, if a carrier currently used by the terminal for communication is the carrier 2, and the terminal receives the first indication information, where the first indication information indicates the carrier 1, the terminal may determine that carrier switching needs to be performed. In other words, the terminal needs to switch from the carrier 2 to the carrier 1. In this case, it may also be considered that the first indication information indicates the carrier switching. For another example, if a radio frequency chain currently used by the terminal for communication is a radio frequency chain 1, and the terminal receives the first indication information, where the first indication information indicates a radio frequency chain 2 and the radio frequency chain 1, the terminal may determine that a quantity of radio frequency chains changes. In other words, the quantity of radio frequency chains of the terminal changes from 1 to 2. In this case, it may be considered that the first indication information indicates the radio frequency chain switching or a change of the quantity of radio frequency chains. For ease of description, in this embodiment of this application, an example in which the first indication information indicates the radio frequency chain switching is used for description.

In a possible case, the first indication information may be downlink control information (downlink control information, DCI). For example, when the first indication information is the DCI, the first indication information may be uplink scheduling (uplink grant, UL grant) signaling, and a format of the first indication information may be a DCI format 0_0, a DCI format 0_1, a DCI format 0_2, or the like. For another example, when the first indication information is the DCI, the first indication information may be group common DCI. In another possible case, the first indication information may be information included in a media access control (media access control, MAC) control element (control element, CE).

In an example, the first indication information may directly indicate the radio frequency chain switching. For example, the first indication information may include an indication field indicating the radio frequency chain switching, and the indication field may directly indicate the radio frequency chain switching. For example, a bit width of the indication field that indicates the radio frequency chain switching and that is in the DCI or the MAC CE is 2 bits. When a value of the indication field is 0, the terminal may perform communication by using zero radio frequency chains. When a value of the indication field is 1, the terminal may perform communication by using one radio frequency chain. The rule applies to another value.

In another example, the first indication information may implicitly indicate the radio frequency chain switching. For example, the base station may implicitly indicate the quantity of radio frequency chains by indicating a quantity of antenna ports.

S202: The terminal sends a first uplink transmission.

Correspondingly, the base station receives the first uplink transmission. For example, the terminal sends the first uplink transmission to the base station, and the base station receives the first uplink transmission from the terminal. Optionally, the first uplink transmission in S202 may be understood as an uplink transmission after the radio frequency chain switching.

It may be understood that the first uplink transmission may include a reference signal such as a channel sounding reference signal (sounding reference signal, SRS), or may include a data channel such as a physical uplink shared channel (physical uplink shared channel, PUSCH).

In S202, the first uplink transmission may include a power headroom. In a possible implementation, the terminal may determine the power headroom when a PHR triggering condition is met. The PHR triggering condition may be configured by the base station. For example, the base station may configure the PHR triggering condition for the terminal by using RRC signaling. For example, the PHR triggering condition may include one or more of the following: a PHR prohibit timer expires and a path loss change of at least one activated serving cell exceeds a preset value; a PHR periodical timer expires; a higher layer configures or reconfigures a power headroom reporting function; any MAC entity activates one secondary cell and a first activated downlink bandwidth part (bandwidth part, BWP) is not a sleep BWP; a primary secondary cell is added; the sleep BWP is switched to a non-sleep BWP in any MAC entity, the PHR prohibit timer expires, the MAC entity has a newly transmitted uplink resource, and the cell has a PUCCH transmission; a power back-off caused by power management exceeds a preset value; and the the like.

In S202, the terminal may determine the power headroom based on at least one of a first power class and a second power class. Optionally, the first power class and the second power class may be the same or may be different.

It may be understood that the first power class may correspond to the uplink transmission after the radio frequency chain switching. For example, the first power class may correspond to the first uplink transmission in S202. The second power class may correspond to an uplink transmission before the radio frequency chain switching. For example, the second power class may correspond to a second uplink transmission. The second uplink transmission may be an uplink transmission before the first indication information in S201. For example, the second uplink transmission is located before the first indication information in time domain. For another example, a time domain resource occupied by the second uplink transmission is located before a time domain resource occupied by the first indication information in time domain. For example, the second uplink transmission may be a last uplink transmission before the first indication information in S201.

It should be noted that an uplink transmission corresponding to a power class may be understood as a power class used by the terminal to send the uplink transmission. Optionally, the power class may be used to determine a maximum transmit power, as shown in the formula (3).

In a possible case, the terminal may determine the power headroom based on the first power class. In other words, the terminal may determine the power headroom by using a power class after the radio frequency chain switching. Alternatively, it may be understood as that the terminal may determine the power headroom by using a power class corresponding to a quantity of radio frequency chains after the radio frequency chain switching. For example, as shown in Table 1, if the terminal switches from 0Tx to 2Tx in the case 2, the terminal may determine the power headroom by using a power class corresponding to 2Tx.

In another possible case, the terminal may determine the power headroom based on the second power class. In other words, the terminal may determine the power headroom by using a power class before the radio frequency chain switching. Alternatively, it may be understood as that the terminal may determine the power headroom by using a power class corresponding to a quantity of radio frequency chains before the radio frequency chain switching. For example, as shown in Table 1, if the terminal switches from 0Tx to 2Tx in the case 2, the terminal may determine the power headroom by using a power class corresponding to 0Tx.

In still another possible case, the terminal may determine the power headroom based on the first power class and the second power class. In other words, the terminal may determine the power headroom by using a power class before the radio frequency chain switching and a power class after the radio frequency chain switching. Alternatively, it may be understood as that the terminal may determine the power headroom by using a power class corresponding to a quantity of radio frequency chains before the radio frequency chain switching and a power class corresponding to a quantity of radio frequency chains after the radio frequency chain switching. For example, as shown in Table 1, if the terminal switches from 0Tx to 2Tx in the case 2, the terminal may determine the power headroom by using a power class corresponding to 0Tx and a power class corresponding to 2Tx.

Optionally, the embodiment shown in FIG. 2 may further include the following operation 5203.

S203: The base station determines the power headroom based on information about the power headroom.

For example, the base station may determine the power headroom based on information that is about the power headroom and that is carried in the first uplink transmission in S202. Optionally, the base station may perform uplink transmission power control on the terminal based on the power headroom.

The following describes in detail a method for determining the power headroom by the terminal.

Method 1: Determine the power headroom based on the first power class and the second power class.

The terminal may determine a first maximum transmit power, namely, $P_{CMAX,f,c}(i)$ in the formula (1), based on a maximum terminal power corresponding to the first power class. For example, the terminal may determine, based on the first power class, the maximum terminal power (power class) corresponding to the first power class, and determine the first maximum transmit power based on the formula (2) to the formula (4). Similarly, the terminal may determine a second maximum transmit power based on a maximum terminal power (power class) corresponding to the second power class.

The terminal may determine a first power headroom based on the formula (1) and the first maximum transmit power. In addition, the terminal may determine a second power headroom based on the formula (1) and the second maximum transmit power. In S202, the first uplink transmission may carry the first power headroom and the second power headroom.

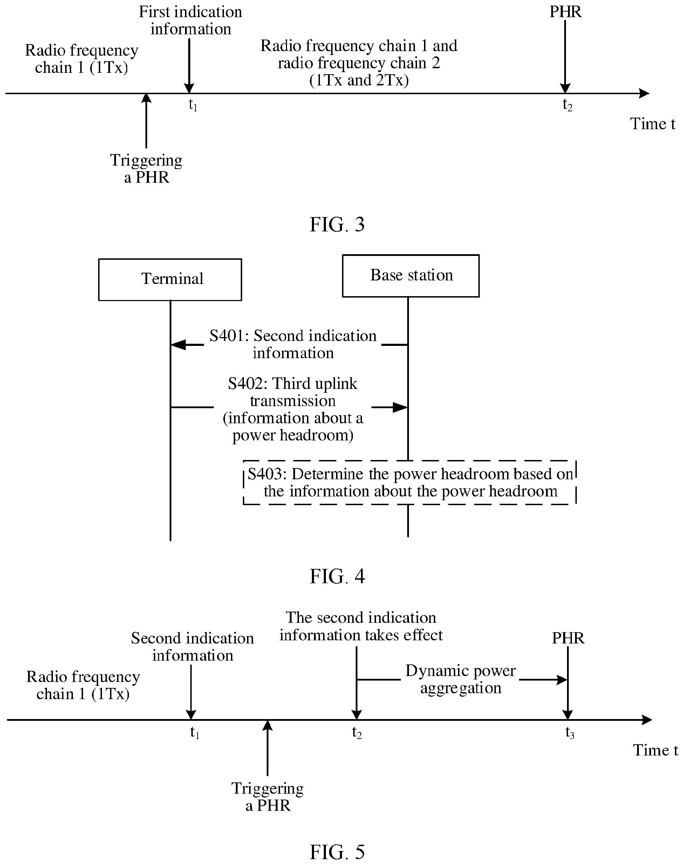

For example, as shown in FIG. 3, the terminal sends an uplink transmission, for example, the second uplink transmission, by using 1Tx before ti. The terminal receives the first indication information at ti. The first indication information indicates radio frequency chains 1Tx and 2Tx, in other words, the terminal may send the uplink transmission, for example, the first uplink transmission, by using a total of two radio frequency chains 1Tx and 2Tx. It is assumed that before $t_1$, the terminal determines, based on the PHR triggering condition, that the power headroom needs to be calculated, and sends a PHR at $t_2$. If the terminal calculates the power headroom based on a currently used power class, to be specific, a power class corresponding to a quantity of radio frequency chains being 1, and when the terminal sends the PHR, the power class used by the terminal is already switched to a power class corresponding to a quantity of radio frequency chains being 2, a maximum transmit power used for the power headroom reported by the terminal is not aligned with that of the base station.

Based on the foregoing method 1 provided in this embodiment of this application, the terminal may calculate the first maximum transmit power based on the first power class, for example, the power class corresponding to the quantity of radio frequency chains being 2. The terminal may calculate the second maximum transmit power based on the second power class, for example, the power class corresponding to the quantity of radio frequency chains being 1. The terminal may respectively determine two power headrooms, referred to as the first power headroom and the second power headroom, based on the first maximum transmit power and the second maximum transmit power. The first power headroom is a power headroom determined based on the first power class, and the second power headroom is a power headroom determined based on the second power class. In this case, the terminal may send the first uplink transmission, for example, a PUSCH, at $t_2$, where the first uplink transmission may carry the first power headroom and the second power headroom.

According to the foregoing solution, when a radio frequency chain occurs, the terminal may determine the power headroom based on the first power class and the second power class, and report the power headroom, where the first power class and the second power class may be understood as the power class before the radio frequency chain switching and the power class after the radio frequency chain switching. In this way, the maximum transmit power used for the power headroom sent by the terminal can be aligned with that of the base station. In this way, the base station may also perform uplink power control on the terminal based on the power headroom sent by the terminal, so that uplink power domain resource utilization can be improved.

Method 2: The terminal determines the power headroom based on the first power class.

The terminal may determine a first maximum transmit power, namely, $P_{CMAX,f,c}(i)$ in the formula (1), based on a maximum terminal power corresponding to the first power class. For example, the terminal may determine, based on the first power class, the maximum terminal power (power class) corresponding to the first power class, and determine the first maximum transmit power based on the formula (2) to the formula (4). The terminal may determine a first power headroom based on the formula (1) and the first maximum transmit power. In S202, the first uplink transmission may carry the first power headroom.

For example, as shown in FIG. 3, the terminal sends an uplink transmission, for example, the second uplink transmission, by using 1Tx before ti. The terminal receives the first indication information at ti. The first indication information indicates radio frequency chains 1Tx and 2Tx, in other words, the terminal may send the uplink transmission, for example, the first uplink transmission, by using a total of two radio frequency chains 1Tx and 2Tx. It is assumed that before $t_1$, the terminal determines, based on the PHR triggering condition, that the power headroom needs to be calculated, and sends a PHR at $t_2$. Based on the foregoing method 2 provided in this embodiment of this application, the terminal may calculate the first maximum transmit power based on the first power class, for example, a power class corresponding to a quantity of radio frequency chains being 2. The terminal may determine the power headroom, referred to as the first power headroom, based on the first maximum transmit power. In this case, the terminal may send the first uplink transmission, for example, a PUSCH, at $t_2$, where the first uplink transmission may carry the first power headroom.

According to the foregoing solution, when a radio frequency chain occurs, the terminal determines the power headroom based on the first power class, and reports the power headroom, where the first power class may be understood as the power class after the radio frequency chain switching. In this way, the maximum transmit power used for the power headroom sent by the terminal can be aligned with that of the base station. In this way, the base station may also perform uplink power control on the terminal based on the power headroom sent by the terminal, so that uplink power domain resource utilization can be improved.

Method 3: The terminal determines the power headroom based on the second power class.

The terminal may determine a second maximum transmit power, namely, $P_{CMAX,f,c}(i)$ in the formula (1), based on a maximum terminal power corresponding to the second power class. For example, the terminal may determine, based on the second power class, the maximum terminal power (power class) corresponding to the second power class, and determine the second maximum transmit power based on the formula (2) to the formula (4). The terminal may determine a second power headroom based on the formula (1) and the second maximum transmit power. In S202, the first uplink transmission may carry the second power headroom.

For example, as shown in FIG. 3, the terminal sends an uplink transmission, for example, the second uplink transmission, by using 1Tx before ti. The terminal receives the first indication information at ti. The first indication information indicates radio frequency chains 1Tx and 2Tx, in other words, the terminal may send the uplink transmission, for example, the first uplink transmission, by using a total of two radio frequency chains 1Tx and 2Tx. It is assumed that before $t_1$, the terminal determines, based on the PHR triggering condition, that the power headroom needs to be calculated, and sends a PHR at $t_2$. Based on the method 3 provided in this embodiment of this application, the terminal may calculate the second maximum transmit power based on the second power class, for example, a power class corresponding to a quantity of radio frequency chains being 1. The terminal may determine the power headroom, referred to as the second power headroom, based on the second maximum transmit power. In this case, the terminal may send the first uplink transmission, for example, a PUSCH, at $t_2$, where the first uplink transmission may carry the second power headroom.

According to the foregoing solution, when a radio frequency chain occurs, the terminal determines the power headroom based on the second power class, and reports the power headroom, where the second power class may be understood as the power class before the radio frequency chain switching. In this way, the maximum transmit power used for the power headroom sent by the terminal can be aligned with that of the base station. In this way, the base station may also perform uplink power control on the terminal based on the power headroom sent by the terminal, so that uplink power domain resource utilization can be improved.

Based on the foregoing method 1 to method 3 shown in this embodiment of this application, when the terminal frequently performs carrier switching, or the maximum transmit power is increased or the maximum transmit power is reduced for short transmission duration, for example, after a current PHR is reported, the maximum transmit power is quickly restored to a state at a moment at which the PHR is triggered, the terminal may determine the power headroom by using any one of the foregoing method 1 to method 3, and report the power headroom. In this way, the maximum transmit power used for the power headroom sent by the terminal can be aligned with that of the base station.

In a possible case, whether determining, by the terminal, the power headroom is based on the foregoing method 1, the foregoing method 2, or the foregoing method 3 may be indicated by the base station by using RRC signaling. For example, the base station may send the RRC signaling to the terminal, where the RRC signaling may include information indicating a mechanism 1, a mechanism 2, or a mechanism 3. The mechanism 1 may be to determine the power headroom based on the first power class and the second power class, that is, the mechanism 1 is the foregoing method 1. The mechanism 2 may be to determine the power headroom based on the first power class, that is, the mechanism 2 is the foregoing method 2. The mechanism 3 may be to determine the power headroom based on the second power class, that is, the mechanism 3 is the foregoing method 3. In this way, the terminal may determine the power headroom in a manner indicated by the base station, so that the power headroom reported by the terminal can meet a requirement of the base station.

It should be understood that the base station may directly indicate the mechanism 1, the mechanism 2, or the mechanism 3 by using the RRC signaling. Alternatively, the base station may implicitly indicate the mechanism 1, the mechanism 2, or the mechanism 3 by using the RRC signaling. Alternatively, the base station indicates, by using the RRC signaling, the UE to use one of the mechanism 1 and the mechanism 2 as a PHR reporting manner. Alternatively, the base station indicates, by using the RRC signaling, the UE to use one of the mechanism 1, the mechanism 2, and the mechanism 3 as a PHR reporting manner. Alternatively, the base station indicates, by using the RRC signaling, the UE to use the mechanism 1 as a PHR reporting manner, or the base station indicates, by using the RRC signaling, the UE to use the mechanism 2 as a PHR reporting manner.

For another example, it is assumed that a protocol predefines that the terminal determines the power headroom in one of a manner 1, a manner 2, and a manner 3. In this case, the terminal may determine the power headroom in a manner predefined in the protocol, and send the power headroom to the base station.

In a possible implementation, the base station may configure, by using the RRC signaling, whether the DCI or the MAC CE (for example, the first indication information) includes indication information indicating the radio frequency chain switching. In other words, the base station may configure, by using the RRC signaling, whether the terminal supports dynamic radio frequency chain switching. For example, the base station may send the RRC signaling to the terminal. If the RRC signaling is used to configure the DCI or the MAC CE to include the indication information indicating the radio frequency chain switching, it may be understood as that the base station configures, by using the RRC signaling, the terminal to support the dynamic radio frequency chain switching. In this way, the base station may indicate, by using the indication information that indicates the radio frequency chain switching and that is in the DCI or the MAC CE, the terminal to use which radio frequency chain or which radio frequency chains to send the uplink transmission.

For example, the base station sends the RRC signaling to the terminal, where the RRC signaling is used to configure the DCI or the MAC CE to include an indication field indicating the radio frequency chain switching. In other words, the base station configures, by using the RRC signaling, the terminal to support the dynamic radio frequency chain switching. In this case, the base station may indicate, to the terminal by using the DCI or the MAC CE, a radio frequency chain or a quantity of radio frequency chains for sending the uplink transmission. The terminal may determine, by using the indication field that indicates the radio frequency chain switching and that is in the DCI or the MAC CE, a radio frequency chain or a quantity of radio frequency chains for sending an uplink signal. For a method for determining, by the terminal, the radio frequency chain or the quantity of radio frequency chains, refer to the foregoing implementations. Details are not described herein again. Optionally, the RRC signaling may further configure a quantity of bits occupied by the indication field that indicates the radio frequency chain switching and that is in the DCI or the MAC CE, for example, one bit, two bits, or more bits. This is not specifically limited in this application.

Optionally, the terminal may send capability information to the base station. The capability information indicates whether the terminal supports the DCI or the MAC CE in including indication information indicating the radio frequency chain switching; or it may be understood as that the capability information indicates whether the terminal supports the dynamic radio frequency chain switching. For example, when the capability information indicates that the terminal supports the DCI or the MAC CE in including the indication information indicating the radio frequency chain switching, that is, the terminal supports the dynamic radio frequency chain switching, the base station may configure, for the terminal by using the RRC signaling, the DCI or the MAC CE to include the indication information indicating the radio frequency chain switching. When the capability information indicates that the terminal does not support the DCI or the MAC CE in including the indication information indicating the radio frequency chain switching, that is, the terminal does not support the dynamic radio frequency chain switching, the base station may configure, for the terminal by using the RRC signaling, that the DCI or the MAC CE does not include the indication information indicating the radio frequency chain switching.

In a possible case, the terminal may determine a first transmit power based on the first maximum transmit power. In S202, the terminal may send the first uplink transmission, for example, the PUSCH, by using the first transmit power. In another possible case, the terminal may determine a second transmit power based on the second maximum transmit power. In S202, the terminal may send the first uplink transmission, for example, the PUSCH, by using the second transmit power. For example, the terminal may determine the first transmit power or the second transmit power based on the following formula (5):

$$P_{PUSCH,b,f,c}(i,j,q_d,l) == MIN \begin{cases} P_{CMAX,f,c}(i) \\ P_{O,PUSCH,b,f,c}(j) + 10\log_{10}\left(2^{\mu} \cdot M_{RB,b,f,c}^{PUSCH}(i)\right) \quad [dBm] \\ + \ \alpha_{b,f,c}(j) \cdot PL_{b,f,c}(q_d) + \Delta_{TF,b,f,c}(i) + f_{b,f,c}(i,l) \end{cases}$$

Formula (5)

The foregoing formula (5) indicates a transmit power of an uplink signal of the terminal on an actual sending occasion i for the uplink signal when the terminal sends the uplink signal in S202 by using a parameter set numbered j on a BWP b of a carrier f of a serving cell c and a power control adjustment state index value is l.

Therefore, the terminal determines the first transmit power by using the foregoing formula (5) and the first maximum transmit power, or determines the second transmit power by using the foregoing formula (5) and the second maximum transmit power. The terminal may choose to send the uplink signal in S202 by using the first transmit power, or choose to send the uplink signal in S202 by using the second transmit power.

It should be noted that, for brief description, the foregoing method embodiments are described as a series of action combinations. However, a person skilled in the art should understand that embodiments of this application are not limited to the described action sequences, because according to embodiments of this application, some steps may be performed in another sequence or performed at the same time. In addition, a person skilled in the art should also understand that embodiments described in this specification all belong to preferred embodiments, and the involved actions and modules are not necessarily required by this application.

In a possible implementation, in a carrier aggregation (carrier aggregation, CA) case, the terminal needs to report, in one MAC CE, PHRs corresponding to a plurality of carriers. Therefore, the MAC CE, for example, an entry MAC CE (multiple entry MAC CE), may include information indicating whether there is PHR reporting on each carrier. For example, the MAC CE may include a field (Ci). The field indicates whether a PHR corresponding to a serving cell i exists. If the field is set to 1, it indicates that the PHR is reported in the corresponding serving cell; otherwise, it indicates that no PHR is reported. For different carriers, if radio frequency chains on the different carriers change or quantities of radio frequency chains change, PHRs on different carriers are calculated differently because of different radio frequency chains or different quantities of radio frequency chains.

Therefore, similarly, in a dynamic carrier aggregation scenario, a maximum transmit power varies with a radio frequency chain. As a result, PHRs are different. Therefore, in the dynamic carrier aggregation scenario, how to perform PHR reporting also becomes a main problem.

In view of this, an embodiment of this application provides a power headroom transmission method. FIG. 4 is an example flowchart of a power headroom transmission method according to an embodiment of this application. The method may include the following operations.

S401: A base station sends second indication information.

Correspondingly, a terminal receives the second indication information. For example, the base station may send the second indication information to the terminal, and the terminal may receive the second indication information from the base station.

In a possible implementation, the second indication information may indicate dynamic power aggregation. Alternatively, the second indication information may be used as scheduling information and take effect in a dynamic power aggregation scenario. For example, at least two carriers are configured as CA. A total power class of the at least two carriers that form the CA may be predefined, or a maximum transmit power is predefined. However, a maximum transmit power of the terminal on one of the at least two carriers may dynamically change, provided that it is ensured that a total power of uplink transmissions simultaneously sent on the at least two carriers does not exceed maximum transmit powers of the at least two carriers.

S402: The terminal sends a third uplink transmission.

Correspondingly, the base station receives the third uplink transmission. For example, the terminal may send the third uplink transmission to the base station, and the base station may receive the third uplink transmission from the terminal.

In an example, the third uplink transmission may include a power headroom. For ease of differentiation, the power headroom included in the third uplink transmission is referred to as a third power headroom. The third power headroom may be a power headroom determined by the terminal in a carrier aggregation scenario.

For example, in the carrier aggregation scenario, the terminal may determine the third power headroom based on a third power class. The third power class may be the total power class of the at least two carriers. The terminal may determine a corresponding maximum terminal power (power class) based on the third power class, and determine a third maximum transmit power based on the formula (2) to the formula (4). The terminal may determine the third power headroom based on the third maximum transmit power and the formula (1).

Optionally, the embodiment shown in FIG. 4 may further include the following operation S403.

S403: The base station determines the power headroom based on information about the power headroom.

For example, the base station may determine the third power headroom based on information that is about the power headroom and that is carried in the third uplink transmission in S402. Optionally, the base station may perform uplink transmission power control on the terminal based on the third power headroom.

For example, as shown in FIG. 5, before $t_1$, the terminal sends an uplink transmission by using a radio frequency chain 1Tx. The terminal receives third indication information at ti. The third indication information indicates dynamic power aggregation. It is assumed that the third indication information takes effect at $t_2$, in other words, the terminal uses the dynamic power aggregation from $t_2$. Between ti and $t_2$, the terminal determines, based on a PHR triggering condition, that the power headroom needs to be calculated, and sends a PHR at $t_3$. If the terminal calculates the power headroom based on a power class used at $t_1$, to be specific, a power class corresponding to a quantity of radio frequency chains being 1, and when the terminal sends the PHR, the power class used by the terminal is already switched to a power class corresponding to power aggregation, a maximum transmit power used for the power headroom reported by the terminal is not aligned with that of the base station. Based on the method shown in FIG. 4, the terminal may calculate the third maximum transmit power based on the third power class, namely, a total power class in the dynamic power aggregation scenario, and determine the third power headroom based on the third maximum transmit power. In this case, the terminal may send the third uplink transmission, for example, a PUSCH, at $t_3$, where the third uplink transmission may carry the third power headroom.

According to the foregoing solution, in the dynamic power aggregation scenario, the terminal determines the power headroom based on the third power class, and reports the power headroom, where the third power class may be understood as the total power class of the at least two carriers forming the CA. In this way, the maximum transmit power used for the power headroom sent by the terminal can be aligned with that of the base station. In this way, the base station may also perform uplink power control on the terminal based on the power headroom sent by the terminal, so that uplink power domain resource utilization can be improved.

In a possible case, the terminal may determine a third transmit power based on the third maximum transmit power. In S202, the terminal may send the third uplink transmission, for example, the PUSCH, by using the third transmit power. For example, the terminal may determine the third transmit power based on the formula (5). Details are not described herein again.

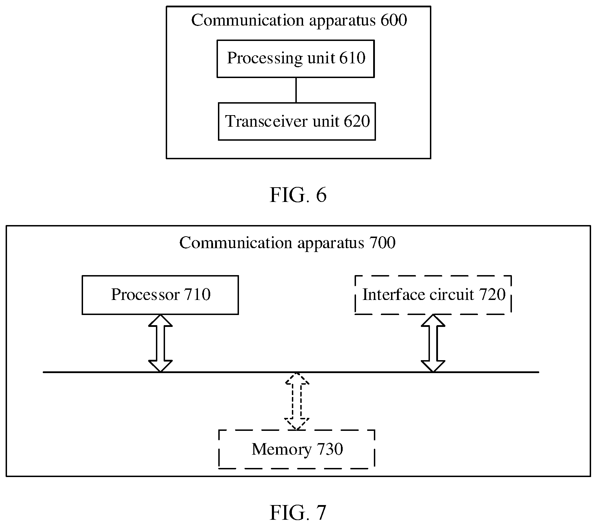

Based on a same concept with the foregoing embodiments, an embodiment of this application further provides a communication apparatus. As shown in FIG. 6, a communication apparatus 600 includes a processing unit 610 and a transceiver unit 620. The communication apparatus 600 is configured to implement the function of the terminal or the base station in the method embodiments shown in FIG. 2 to FIG. 5.

When the communication apparatus 600 is configured to implement the function of the terminal, the transceiver unit 620 is configured to receive first indication information. The first indication information indicates radio frequency chain switching. The processing unit 610 is configured to determine a power headroom based on at least one of a first power class and a second power class. The first power class corresponds to an uplink transmission after the radio frequency chain switching, and the second power class corresponds to an uplink transmission before the radio frequency chain switching. The transceiver unit 620 is configured to send a first uplink transmission. The first uplink transmission includes information about the power headroom. The first uplink transmission is the uplink transmission after the radio frequency chain switching.

In a design, the first power class is a power class corresponding to a quantity of radio frequency chains after the radio frequency chain switching, and the second power class is a power class corresponding to a quantity of radio frequency chains before the radio frequency chain switching.

In a design, the power headroom includes a first power headroom and a second power headroom. The first power headroom is a power headroom determined based on the first power class, and the second power headroom is a power headroom determined based on the second power class.

In a design, the power headroom includes a first power headroom and does not include a second power headroom. The first power headroom is a power headroom determined based on the first power class, and the second power headroom is a power headroom determined based on the second power class.

In a design, the power headroom includes a second power headroom and does not include a first power headroom. The first power headroom is a power headroom determined based on the first power class, and the second power headroom is a power headroom determined based on the second power class.

In a design, the first power headroom may be determined based on a first maximum transmit power determined based on the first power class. The second power headroom may be determined based on a second maximum transmit power determined based on the second power class.

In a design, the first indication information is DCI or information included in a MAC CE.

In a design, the transceiver unit 620 is further configured to receive first radio resource control RRC signaling, where the first RRC signaling includes information indicating a mechanism 1 or a mechanism 2. The mechanism 1 is to determine the power headroom based on the first power class and the second power class, and the mechanism 2 is to determine the power headroom based on the first power class.

In a design, the transceiver unit 620 is further configured to receive second RRC signaling, where the second RRC signaling is used to configure the DCI or the MAC CE to include indication information indicating the radio frequency chain switching.

In a design, the transceiver unit 620 is further configured to send capability information, where the capability information indicates that the terminal device supports the DCI or the MAC CE in including indication information indicating the radio frequency chain switching.

When the communication apparatus 600 is configured to implement the function of the base station, the transceiver unit 620 is configured to send first indication information. The first indication information indicates radio frequency chain switching. The transceiver unit 620 is further configured to receive a first uplink transmission. The first uplink transmission includes information about a power headroom. The processing unit 610 is configured to determine the power headroom based on the information about the power headroom. The power headroom is determined based on at least one of a first power class and a second power class. The first power class corresponds to an uplink transmission after the radio frequency chain switching, and the second power class corresponds to an uplink transmission before the radio frequency chain switching. The first uplink transmission is the uplink transmission after the radio frequency chain switching.

In a design, the first power class is a power class corresponding to a quantity of radio frequency chains after the radio frequency chain switching, and the second power class is a power class corresponding to a quantity of radio frequency chains before the radio frequency chain switching.

In a design, the power headroom includes a first power headroom and a second power headroom. The first power headroom is a power headroom determined based on the first power class, and the second power headroom is a power headroom determined based on the second power class. In a design, the power headroom includes a first power headroom and does not include a second power headroom. The first power headroom is a power headroom determined based on the first power class, and the second power headroom is a power headroom determined based on the second power class.

In a design, the power headroom includes a second power headroom and does not include a first power headroom. The first power headroom is a power headroom determined based on the first power class, and the second power headroom is a power headroom determined based on the second power class.

In a design, the first power headroom may be determined based on a first maximum transmit power determined based on the first power class. The second power headroom may be determined based on a second maximum transmit power determined based on the second power class.

In a design, the first indication information is DCI or information included in a MAC CE.

In a design, the transceiver unit 620 is further configured to send first RRC signaling, where the first RRC signaling includes information indicating a mechanism 1 or a mechanism 2. The mechanism 1 is to determine the power headroom based on the first power class and the second power class, and the mechanism 2 is to determine the power headroom based on the first power class.

In a design, the transceiver unit 620 is further configured to send second RRC signaling, where the second RRC signaling is used to configure the DCI or the MAC CE to include indication information indicating the radio frequency chain switching.

In a design, the transceiver unit 620 is further configured to receive capability information, where the capability information indicates that the terminal device supports the DCI or the MAC CE in including indication information indicating the radio frequency chain switching.

For more detailed descriptions of the processing unit 610 and the transceiver unit 620, directly refer to related descriptions in the method embodiments shown in FIG. 2 to FIG. 5. Details are not described herein.

As shown in FIG. 7, a communication apparatus 700 may include a processor 710. Optionally, the communication apparatus 700 may further include an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, input data required by the processor 710 to run the instructions, or data generated after the processor 710 runs the instructions.

In a first implementation, the communication apparatus 700 may be configured to implement the method corresponding to the terminal device in the foregoing embodiments. For details, refer to the descriptions in the foregoing embodiments.

In a second implementation, the communication apparatus 700 may be configured to implement the method corresponding to the network device in the foregoing embodiments. For details, refer to the descriptions in the foregoing embodiments.

When the communication apparatus 700 is configured to implement the methods shown in FIG. 2 to FIG. 5, the processor 710 is configured to implement the function of the processing unit 610, and the interface circuit 720 is configured to implement the function of the transceiver unit 620.

When the communication apparatus is a chip used in a terminal, the chip in the terminal implements the function of the terminal in the foregoing method embodiment. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the communication apparatus is a module used in a base station, the implements the function of the base station in the foregoing method embodiment. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal.

The module in the base station herein may be a baseband chip in the base station, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

This application further provides a computer-readable storage medium. The computer-readable storage medium stores a computer program or instructions, and when the computer program is or the instructions are run, the method performed by the network device or the terminal device according to the foregoing method embodiment is implemented. In this way, the function in the foregoing embodiment may be implemented in a form of a software functional unit and sold or used as an independent product. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory ROM, a random access memory RAM, a magnetic disk, or an optical disc.

This application further provides a computer program product. The computer program product includes computer program code. When the computer program code is run on a computer, the computer is enabled to perform the method performed by the terminal device or the network device in any one of the foregoing method embodiments.

This application further provides a system. The system includes an apparatus for performing the function of the foregoing terminal device and an apparatus for performing the function of the foregoing network device.

An embodiment of this application further provides a processing apparatus, including a processor and an interface. The processor is configured to perform the method performed by the terminal device or the network device in any one of the foregoing method embodiments.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a base station or a terminal. Certainly, the processor and the storage medium may exist in the base station or the terminal as discrete components.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: the volatile storage medium and the non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more than two. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It should be further understood that, in this application, both "when ..." and "if" mean that a network element performs corresponding processing in an objective situation, and are not intended to limit time. The terms do not mean that the network element is required to have a determining action during implementation, and do not mean any other limitation.

It should be further understood that, ordinal numbers such as "first" and "second" in embodiments of this application are used to distinguish between a plurality of objects, but are not intended to limit sizes, content, a sequence, a time sequence, priorities, importance degrees, or the like of the plurality of objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on the functions and internal logic of the processes.

**Claims**

1. A power headroom transmission method, comprising:

   receiving first indication information, wherein the first indication information indicates radio frequency chain switching; and
   sending a first uplink transmission, wherein the first uplink transmission comprises information about a power headroom, and the power headroom is determined based on at least one of a first power class and a second power class, wherein the first power class corresponds to an uplink transmission after the radio frequency chain switching, the second power class corresponds to an uplink transmission before the radio frequency chain switching, and the first uplink transmission is the uplink transmission after the radio frequency chain switching.

2. The method according to claim 1, wherein the first power class is a power class corresponding to a quantity of radio frequency chains after the radio frequency chain switching, and the second power class is a power class corresponding to a quantity of radio frequency chains before the radio frequency chain switching.

3. The method according to claim 1 or 2, wherein the power headroom comprises a first power headroom and a second power headroom, the first power headroom is a power headroom determined based on the first power class, and the second power headroom is a power headroom determined based on the second power class.

4. The method according to claim 1 or 2, wherein the power headroom comprises a first power headroom but does not comprise a second power headroom, the first power headroom is a power headroom determined based on the first power class, and the second power headroom is a power headroom determined based on the second power class.

5. The method according to claim 3 or 4, wherein the first power headroom is a power class determined based on a first maximum transmit power determined based on the first power class; and
   the second power headroom is a power class determined based on a second maximum transmit power determined based on the second power class.

6. The method according to any one of claims 1 to 5, wherein the first indication information is downlink control information DCI or information comprised in a media access control MAC control element CE.

7. The method according to any one of claims 1 to 6, wherein before the sending a first uplink transmission, the method further comprises:

   receiving first radio resource control RRC signaling, wherein the first RRC signaling comprises information indicating a mechanism 1 or a mechanism 2, wherein
   the mechanism 1 is to determine the power headroom based on the first power class and the second power class, and the mechanism 2 is to determine the power headroom based on the first power class.

**8.** The method according to any one of claims 1 to 6, wherein before the receiving first indication information, the method further comprises:
receiving second RRC signaling, wherein the second RRC signaling is used to configure the DCI or the MAC CE to comprise indication information indicating the radio frequency chain switching.

**9.** The method according to any one of claims 1 to 6, wherein before the receiving first indication information, the method further comprises:
sending capability information, wherein the capability information indicates that a terminal device supports the DCI or the MAC CE in comprising indication information indicating the radio frequency chain switching.

**10.** A power headroom transmission method, comprising:

sending first indication information, wherein the first indication information indicates radio frequency chain switching; and
receiving a first uplink transmission, wherein the first uplink transmission comprises information about a power headroom, and the power headroom is determined based on at least one of a first power class and a second power class, wherein the first power class corresponds to an uplink transmission after the radio frequency chain switching, the second power class corresponds to an uplink transmission before the radio frequency chain switching, and the first uplink transmission is the uplink transmission after the radio frequency chain switching.

**11.** The method according to claim 10, wherein the first power class is a power class corresponding to a quantity of radio frequency chains after the radio frequency chain switching, and the second power class is a power class corresponding to a quantity of radio frequency chains before the radio frequency chain switching.

**12.** The method according to claim 10 or 11, wherein the power headroom comprises a first power headroom and a second power headroom, the first power headroom is a power headroom determined based on the first power class, and the second power headroom is a power headroom determined based on the second power class.

**13.** The method according to claim 10 or 11, wherein the power headroom comprises a first power headroom and does not comprise a second power headroom, the first power headroom is a power headroom determined based on the first power class, and the second power headroom is a power headroom determined based on the second power class.

**14.** The method according to claim 12 or 13, wherein the first power headroom is a power class determined based on a first maximum transmit power determined based on the first power class; and
the second power headroom is a power class determined based on a second maximum transmit power determined based on the second power class.

**15.** The method according to any one of claims 10 to 14, wherein the first indication information is downlink control information DCI or information comprised in a media access control MAC control element CE.

**16.** The method according to any one of claims 10 to 15, wherein before the receiving a first uplink transmission, the method further comprises:

sending first radio resource control RRC signaling, wherein the first RRC signaling comprises information indicating a mechanism 1 or a mechanism 2, wherein
the mechanism 1 is to determine the power headroom based on the first power class and the second power class, and the mechanism 2 is to determine the power headroom based on the first power class.

**17.** The method according to any one of claims 10 to 16, wherein before the sending first indication information, the method further comprises:
sending second RRC signaling, wherein the second RRC signaling is used to configure the DCI or the MAC CE to comprise indication information indicating the radio frequency chain switching.

**18.** The method according to any one of claims 10 to 17, wherein before the sending first indication information, the method further comprises:
receiving capability information, wherein the capability information indicates that a terminal device supports the DCI or the MAC CE in comprising indication information indicating the radio frequency chain switching.

**19.** A communication apparatus, comprising a unit configured to perform the method according to any one of claims 1 to 9.

**20.** A communication apparatus, comprising a unit configured to perform the method according to any one of claims 10 to 18.

**21.** A communication apparatus, comprising a processor, wherein the processor is configured to be coupled to a memory, and the processor is configured to execute a computer program or instructions stored in the memory, to enable the method according to any one of claims 1 to 9 or the method according to any one of claims 10 to 18 to be performed.

**22.** A computer-readable storage medium, wherein the storage medium stores a computer program or instructions, and when the computer program or the instructions are executed by a communication apparatus, the method according to any one of claims 1 to 9 or the method according to any one of claims 10 to 18 is implemented.

**23.** A computer program product, comprising computer-executable instructions, wherein when the computer-executable instructions are run on a computer, the computer is enabled to perform the method according to any one of claims 1 to 9 or the method according to any one of claims 10 to 18.

**24.** A communication system, comprising a communication apparatus configured to perform the method according to any one of claims 1 to 9 and a communication apparatus configured to perform the method according to any one of claims 10 to 18.

FIG. 1

FIG. 2

First indication
information

PHR

Radio frequency
chain 1 (1Tx)

Radio frequency chain 1 and
radio frequency chain 2
(1Tx and 2Tx)

$t_1$

$t_2$

Time t

Triggering
a PHR

**FIG. 3**

| Terminal | | Base station |
|---|---|---|

S401: Second indication
information

S402: Third uplink
transmission
(information about a
power headroom)

S403: Determine the power headroom based on
the information about the power headroom

**FIG. 4**

The second indication
information takes effect

Second indication
information

PHR

Radio frequency
chain 1 (1Tx)

Dynamic power
aggregation

$t_1$

$t_2$

$t_3$

Time t

Triggering
a PHR

**FIG. 5**

Communication apparatus 600

Processing unit 610

Transceiver unit 620

FIG. 6

Communication apparatus 700

Processor 710

Interface circuit 720

Memory 730

FIG. 7

## INTERNATIONAL SEARCH REPORT

<table>
<tr><td colspan="2">International application No.</td></tr>
<tr><td colspan="2">**PCT/CN2023/074844**</td></tr>
</table>

**A. CLASSIFICATION OF SUBJECT MATTER**

H04W 52/36(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; 3GPP: 功率, 余量, 传输, 射频, 链路, 切换, 上行, 指示, 等级, power, headroom, PHR, switch, uplink, waveform, second

**C. DOCUMENTS CONSIDERED TO BE RELEVANT**

| Category* | Citation of document, with indication, where appropriate, of the relevant passages | Relevant to claim No. |
|---|---|---|
| X | CN 110583053 A (SAMSUNG ELECTRONICS CO., LTD.) 17 December 2019 (2019-12-17) description, paragraphs [0002]-[0364], and figures 1-28 | 1-24 |
| X | CN 108401525 A (BEIJING XIAOMI MOBILE SOFTWARE CO., LTD.) 14 August 2018 (2018-08-14) description, paragraphs [0002]-[0150], and figures 1-9 | 1-24 |
| X | CN 111357371 A (ZTE CORP.) 30 June 2020 (2020-06-30) description, paragraphs [0002]-[0080] | 1-24 |
| X | CN 110149684 A (VIVO COMMUNICATION TECHNOLOGY CO., LTD.) 20 August 2019 (2019-08-20) description, paragraphs [0002]-[0169], and figures 1-12 | 1-24 |

☐ Further documents are listed in the continuation of Box C.      ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 April 2023** | **16 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/074844**

| Patent document cited in search report | | | Publication date (day/month/year) | Patent family member(s) | Publication date (day/month/year) |
|---|---|---|---|---|---|
| CN | 110583053 | A | 17 December 2019 | None | |
| CN | 108401525 | A | 14 August 2018 | None | |
| CN | 111357371 | A | 30 June 2020 | None | |
| CN | 110149684 | A | 20 August 2019 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210173492